# EUROPEAN PATENT APPLICATION

(11) **EP 4 503 565 A1**
(43) Date of publication of application: **05.02.2025**
(21) Application number: 23795309.6
(22) Date of filing: 24.04.2023
(51) Int. Cl.: H04L 49/102, H04W 16/14

(54) **COMMUNICATION METHOD AND COMMUNICATION APPARATUS**

(30) Priority: 28.04.2022 CN 202210461503
(71) Applicant: Huawei Technologies Co., Ltd., Shenzhen, Guangdong 518129 (CN)
(72) Inventor: ZENG, Yu, Shenzhen, Guangdong 518129 (CN); GENG, Tingting, Shenzhen, Guangdong 518129 (CN)
(74) Representative: MERH-IP Matias Erny Reichl Hoffmann Patentanwälte PartG mbB
(86) International application number: PCT/CN2023/090194
(87) International publication number: WO 2023/207876

(57) **Abstract**

Embodiments of this application provide a communication method and a communication apparatus, to implement access network sharing. The method in embodiments of this application includes: A first access network device receives first information from a first core network device, where the first information indicates the first access network device to associate with a first public land mobile network PLMN via the first core network device, and the first PLMN corresponds to a second core network device; and the first access network device establishes a connection to the second core network device via the first core network device.

## Description

This application claims priority to Chinese Patent Application No. 202210461503.3, filed with the China National Intellectual Property Administration on April 28, 2022 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

In independent network construction, operators face challenges of high spectrum license fees, high network deployment costs, high network coverage requirements in a short period of time, and site deployment. Therefore, a concept of network sharing is proposed.

A radio access network (radio access network, RAN) sharing architecture includes an access network and core networks of a plurality of operators. The access network includes at least one sharing base station, and communicates with the core networks of the plurality of operators via the sharing base station, so that the plurality of operators can share the access network. However, for the RAN sharing architecture, no solution has been proposed currently for how to establish a connection between the sharing base station and a core network of an operator that needs to share the access network.

### SUMMARY

This application provides a communication method and a communication apparatus, to implement access network sharing.

According to a first aspect of this application, a communication method is provided, including:
A first access network device receives first information from a first core network device, where the first information indicates the first access network device to associate with a first public land mobile network (public land mobile network, PLMN) via the first core network device, and the first PLMN corresponds to a second core network device; and the first access network device establishes a connection to the second core network device via the first core network device.

The first PLMN is a PLMN supported by the second core network device, in other words, a PLMN served by the second core network device.

According to the foregoing technical solution, the first access network device can quickly and efficiently establish the connection to the second core network device via the first core network device based on the indication of the first information, so that the first access network device can exchange information with the second core network device, improving efficiency of communication between the first access network device and the second core network device, and improving a communication mechanism for access network sharing.

In a possible implementation, there is a direct communication interface between the first access network device and the first core network device, and there is no direct communication interface between the first access network device and the second core network device. In addition, there may be a direct communication interface between the first core network device and the second core network device.

In another possible implementation, the first information includes a correspondence between the first core network device and at least one PLMN that includes the first PLMN, and a correspondence between the first PLMN and the second core network device.

In this implementation, the first access network device can learn of the correspondence between the first core network device and the at least one PLMN that includes the first PLMN. For a roaming sharing PLMN in the at least one PLMN, the first core network device may serve as a forwarding device to forward related information of the roaming sharing PLMN to a core network device corresponding to the roaming sharing PLMN. In addition, based on the correspondence between the first PLMN and the second core network device, the first access network device can learn that the first PLMN is a PLMN supported by the second core network device, to determine to establish the connection to the second core network device. Therefore, based on the two correspondences, the first access network device can sense that the first PLMN is a roaming sharing PLMN, to efficiently and accurately select and connect to the second core network device corresponding to the first PLMN.

In another possible implementation, the first information includes a correspondence between the first core network device and at least one PLMN that includes the first PLMN.

In this implementation, the first access network device learns of the correspondence between the first core network device and the at least one PLMN that includes the first PLMN. For the first access network device, the first access network device only needs to forward information about the first PLMN to the first core network device corresponding to the first PLMN. The first access network device does not need to sense whether the first PLMN is a roaming sharing PLMN. Therefore, a requirement on a capability of the first access network device is low, and a processing procedure on the access network side is simplified.

In another possible implementation, the method further includes:

The first access network device sends second information to the first core network device, where the second information indicates one or more PLMNs supported by the first access network device.

In this implementation, the first access network device may actively indicate, to the first core network device, the one or more PLMNs supported by the first access network device, so that the first core network device determines a correspondence between at least one PLMN of the one or more PLMNs and a core network device, and delivers the correspondence to the first access network device. In this way, the correspondence that is between the PLMN and the core network device and that is maintained by the first access network device is better adapted to the first access network device.

In another possible implementation, the method further includes:

The first access network device sends third information to the first core network device, where the third information indicates one or more roaming sharing PLMNs in the one or more PLMNs supported by the first access network device, and the first PLMN belongs to the one or more roaming sharing PLMNs.

In this implementation, the first access network device indicates, to the first core network device, that the first access network device supports one or more roaming sharing PLMNs, to assist the first core network device in determining the correspondence between a PLMN and a core network device. For example, the first core network device does not support the first PLMN. However, the first core network device determines, based on the third information, that the first PLMN is a roaming sharing PLMN. Therefore, the first core network device may search, based on the third information, for a target core network device that has a direct communication interface with the first core network device and supports the first PLMN, use the target core network device as a target core device corresponding to the first PLMN, and then notify the access network device of the target core device.

In another possible implementation, the method further includes:

The first access network device sends fourth information to a terminal device, where the fourth information includes at least one of the following: first indication information, second indication information, or identification information of a target core network device corresponding to each of one or more PLMNs supported by a cell in which the terminal device is located, the first indication information indicates whether the one or more PLMNs supported by the cell in which the terminal device is located are roaming sharing PLMNs, and the second indication information indicates whether there is a direct communication interface between the first access network device and the target core network device corresponding to each of the one or more PLMNs supported by the cell in which the terminal device is located.

In this implementation, the fourth information may be used to assist the terminal device in selecting a suitable PLMN for access.

In another possible implementation, the one or more PLMNs supported by the cell in which the terminal device is located include the first PLMN; and the fourth information includes at least one of the following: the first indication information indicating that the first PLMN is a roaming sharing PLMN, identification information of the second core network device, and the second indication information indicating that there is no direct communication interface between the second core network device and the first access network device.

In another possible implementation, the method further includes:

The first access network device receives a first request from the terminal device, where the first request is used to request to access a target PLMN, and the target PLMN is determined by the terminal device based on the fourth information from the one or more PLMNs supported by the cell in which the terminal device is located; the first access network device determines a target core network device corresponding to the target PLMN; and the first access network device sends fifth information to the target core device, where the fifth information indicates that the terminal device requests to access the target PLMN.

In another possible implementation, when the target PLMN is the first PLMN, the target core network device is the second core network device, and that the first access network device sends fifth information to the target core device includes:

The first access network device sends the fifth information to the second core network device via the first core network device.

In this implementation, if the target PLMN is the first PLMN, the first access network device may forward the fifth information to the second core network device via the first core network device. In this way, the terminal device accesses the first PLMN.

In another possible implementation, the fifth information further includes identification information of the second core network device, so that the first core network device forwards the fifth information to the second core network device.

In another possible implementation, the method further includes:

The first access network device receives sixth information from the terminal device, where the sixth information includes at least one of the following: third indication information, fourth indication information, or identification information of a target core network device corresponding to each of one or more PLMNs supported by a neighboring cell, the third indication information indicates whether the one or more PLMNs supported by the neighboring cell are roaming sharing PLMNs, the fourth indication information indicates whether there is an interface connected between a second access network device and the target core network device corresponding to each of the one or more PLMNs supported by the neighboring cell, the neighboring cell is a neighboring cell of the cell in which the terminal device is located, and the second access network device is an access network device of the neighboring cell.

In this implementation, the first access network device receives the sixth information from the terminal device. In this way, when the terminal device performs a cell handover, the terminal device requests, from the first access network device, related information of a PLMN supported by a cell to which the terminal device is to be handed over. This helps the terminal device select a suitable PLMN for access.

In the foregoing implementation, there is no direct communication interface between a core network device corresponding to the roaming sharing PLMN and the first access network device.

In another possible implementation, the second information is carried in an NG interface setup request message, and correspondingly, the first information is carried in an NG interface setup response message.

In this implementation, the first core network device configures the first information for the first access network device in an NG interface setup process.

In another possible implementation, the second information is carried in an access network configuration update message, and correspondingly, the first information is carried in an access network configuration update acknowledgment message.

In this implementation, the first core network device configures the first information for the first access network device in an access network configuration update process.

In another possible implementation, the second information and the third information may be carried in a same message. For example, the second information and the third information are carried in the NG interface setup request message or the access network configuration update message.

In another possible implementation, the fourth information is carried in a broadcast message.

In this implementation, the first access network device broadcasts the fourth information via the broadcast message, so that another terminal device in the cell in which the terminal device is located obtains the fourth information. For example, the first access network device may send the fourth information via a system information block (system information block, SIB 1) message.

In another possible implementation, the fifth information is carried in an initial user equipment message (Initial UE Message).

According to a second aspect of this application, a communication method is provided, including:

A first core network device determines first information, where the first information indicates a first access network device to associate with a first PLMN via the first core network device, and the first PLMN corresponds to a second core network device; and the first core network device sends the first information to the first access network device, where the first information is used by the first access network device to establish a connection to the second core network device via the first core network device.

In a possible implementation, there is a direct communication interface between the first access network device and the first core network device, and there is no direct communication interface between the first access network device and the second core network device.

In another possible implementation, the first information includes a correspondence between the first core network device and at least one PLMN that includes the first PLMN, and a correspondence between the first PLMN and the second core network device.

In another possible implementation, the first information includes a correspondence between the first core network device and at least one PLMN that includes the first PLMN.

In another possible implementation, the method further includes:

The first core network device receives second information from the first access network device, where the second information indicates one or more PLMNs supported by the first access network device.

In another possible implementation, the method further includes:

The first core network device receives third information from the first access network device, where the third information indicates one or more roaming sharing PLMNs in the one or more PLMNs supported by the first access network device, and the first PLMN belongs to the one or more roaming sharing PLMNs.

In another possible implementation, the method further includes:

The first core network device receives fifth information from the first access network device, where the fifth information indicates that a terminal device requests to access a target PLMN, and the target PLMN is determined by the terminal device from one or more PLMNs supported by a cell in which the terminal device is located.

In another possible implementation, when the target PLMN is the first PLMN, the method further includes: The first core network device determines that the first PLMN corresponds to the second core network device; and the first core network device sends the fifth information to the second core network device.

In another possible implementation, that the first core network device determines that the first PLMN corresponds to the second core network device includes: The first core network device determines, based on the first information, that the first PLMN corresponds to the second core network device; or
the first core network device determines, based on the fifth information, that the first PLMN corresponds to the second core network device, where the fifth information further includes identification information of the second core network device corresponding to the first PLMN.

In this implementation, two possible implementations in which the first core network device determines that the first PLMN corresponds to the second core network device are shown, so that the first core network device forwards the fifth information to the second core network device. This ensures that the terminal device can access a suitable PLMN.

In another possible implementation, there is no direct communication interface between a core network device corresponding to the roaming sharing PLMN and the first access network device.

For technical effects of the second aspect and the possible implementations of the second aspect, refer to related descriptions of the technical effects of the first aspect and the possible implementations of the first aspect.

According to a third aspect of this application, a communication method is provided, including:

A terminal device receives first information from a first access network device, where the first information includes at least one of the following: first indication information, second indication information, or identification information of a target core network device corresponding to each of one or more PLMNs supported by a cell in which the terminal device is located, the first indication information indicates whether the one or more PLMNs supported by the cell in which the terminal device is located are roaming sharing PLMNs, and the second indication information indicates whether there is a direct communication interface between the first access network device and the target core network device corresponding to each of the one or more PLMNs supported by the cell in which the terminal device is located; the terminal device determines, based on the first information, a target PLMN from the one or more PLMNs supported by the cell in which the terminal device is located; and the terminal device sends a first request to the first access network device to request to access the target PLMN.

In the foregoing technical solution, the terminal device may receive the first information from the first access network device, to assist the terminal device in selecting a suitable PLMN for access.

In a possible implementation, that the terminal device determines, based on the first information, a target PLMN from the one or more PLMNs supported by the cell in which the terminal device is located includes: The terminal device determines, based on the first information and at least one of capability information of supporting a PLMN by the terminal device and preference information of the terminal device for a PLMN, the target PLMN from the one or more PLMNs supported by the cell in which the terminal device is located.

In this implementation, in addition to the first information, the terminal device may further determine the target PLMN with reference to the capability information of supporting a PLMN by the terminal device and the preference information of the terminal device for a PLMN. This further helps the terminal device select a suitable PLMN.

In another possible implementation, the method further includes:

The terminal device receives second information from a second access network device, where the second information includes at least one of the following: third indication information, fourth indication information, or identification information of a target core network device corresponding to each of one or more PLMNs supported by a neighboring cell, the third indication information indicates whether the one or more PLMNs supported by the neighboring cell are roaming sharing PLMNs, the fourth indication information indicates whether there is a direct communication interface between the second access network device and the target core network device corresponding to each of the one or more PLMNs supported by the neighboring cell, the neighboring cell is a neighboring cell of the cell in which the terminal device is located, and the second access network device is an access network device of the neighboring cell; and the terminal device sends the sixth information to the first access network device.

In another possible implementation, the one or more PLMNs supported by the cell in which the terminal device is located include a first PLMN, the first PLMN is a first PLMN that is indicated by a first core network device to the first access network device and that is associated with the first core network device, the first PLMN corresponds to a second core network device, and first information includes at least one of the following: the first indication information indicating that the first PLMN is a roaming sharing PLMN, identification information of the second core network device, and the second indication information indicating that there is no direct communication interface between the second core network device and the first access network device.

In another possible implementation, the target PLMN is the first PLMN.

In another possible implementation, there is no direct communication interface between a core network device corresponding to the roaming sharing PLMN and the first access network device.

For technical effects of the third aspect and the possible implementations of the third aspect, refer to related descriptions of the technical effects of the first aspect and the possible implementations of the first aspect.

According to a fourth aspect of this application, a communication apparatus is provided. The communication apparatus includes a transceiver unit and a processing unit.

The transceiver unit is configured to perform receiving and sending operations in any implementation of the first aspect. The processing unit is configured to perform a processing operation in any implementation of the first aspect.

In a possible implementation, the communication apparatus is an access network device.

In a possible implementation, the communication apparatus is an apparatus used in an access network device, for example, a chip.

According to a fifth aspect of this application, a communication apparatus is provided. The communication apparatus includes a transceiver unit and a processing unit.

The transceiver unit is configured to perform receiving and sending operations in any implementation of the second aspect. The processing unit is configured to perform a processing operation in any implementation of the second aspect.

In a possible implementation, the communication apparatus is a core network device.

In a possible implementation, the communication apparatus is an apparatus used in a core network device, for example, a chip.

According to a sixth aspect of this application, a communication apparatus is provided. The communication apparatus includes a transceiver unit and a processing unit.

The transceiver unit is configured to perform receiving and sending operations in any implementation of the third aspect. The processing unit is configured to perform a processing operation in any implementation of the third aspect.

In a possible implementation, the communication apparatus is a terminal device.

In a possible implementation, the communication apparatus is an apparatus used in a terminal device, for example, a chip.

According to a seventh aspect of this application, a communication apparatus is provided. The communication apparatus includes a processor. The processor is configured to invoke a computer program or computer instructions in a memory, so that the processor implements any implementation of any one of the first aspect to the third aspect.

Optionally, the communication apparatus further includes the memory, and the memory stores the computer program or the computer instructions.

Optionally, the processor and the memory are integrated together.

Optionally, the communication apparatus further includes a transceiver, and the processor is configured to control the transceiver to perform any implementation of any one of the first aspect to the third aspect.

According to an eighth aspect of embodiments of this application, a computer program product including computer instructions is provided, where when the computer program product runs on a computer, the computer is enabled to perform any implementation of any one of the first aspect to the third aspect.

According to a ninth aspect of embodiments of this application, a computer-readable storage medium is provided, including computer instructions. When the computer instructions are run on a computer, the computer is enabled to perform any implementation of any one of the first aspect to the third aspect.

According to a tenth aspect of embodiments of this application, a chip apparatus is provided, including a processor, configured to invoke a computer program or computer instructions in a memory, so that the processor performs any implementation of any one of the first aspect to the third aspect.

Optionally, the processor is coupled to the memory through an interface.

According to an eleventh aspect of embodiments of this application, a communication system is provided. The communication system includes the communication apparatus according to the fourth aspect and the communication apparatus according to the fifth aspect.

Optionally, the communication system further includes the communication apparatus according to the sixth aspect.

### BRIEF DESCRIPTION OF DRAWINGS

FIG. 1 is a diagram of a communication system according to an embodiment of this application;
FIG. 2 is a diagram of a structure of an access network device according to an embodiment of this application;
FIG. 3A and FIG. 3B are a diagram of an embodiment of a communication method according to an embodiment of this application;
FIG. 4 is a diagram of a scenario of a communication method according to an embodiment of this application;
FIG. 5 is a diagram of another scenario of a communication method according to an embodiment of this application;
FIG. 6 is a diagram of another embodiment of a communication method according to an embodiment of this application;
FIG. 7 is a diagram of another scenario of a communication method according to an embodiment of this application;
FIG. 8 is a diagram of a structure of a communication apparatus according to an embodiment of this application;
FIG. 9 is a diagram of another structure of a communication apparatus according to an embodiment of this application;
FIG. 10 is a diagram of another structure of a communication apparatus according to an embodiment of this application;
FIG. 11 is a diagram of another structure of a communication apparatus according to an embodiment of this application; and
FIG. 12 is a diagram of a structure of a terminal device according to an embodiment of this application.

### DESCRIPTION OF EMBODIMENTS

The following clearly and completely describes the technical solutions in embodiments of this application with reference to the accompanying drawings in embodiments of this application.

Reference to "an embodiment", "some embodiments", or the like described in this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In descriptions of this application, unless otherwise specified, "/" means "or". For example, A/B may mean A or B. Aterm "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. At least one of the following items (pieces) or a similar expression thereof indicates any combination of these items, including a single item (piece) or any combination of a plurality of items (pieces). For example, at least one of a, b, or c may indicate a, b, c, a and b, a and c, b and c, or a, b, and c. a, b, and c may be singular or plural.

Mutual reference may be made to content in embodiments of this application. Unless otherwise specified or a logical conflict occurs, terms and/or descriptions in different embodiments are consistent and may be referenced to each other. Technical features in different embodiments may be combined to form a new embodiment based on an internal logical relationship of the technical features.

The following describes some technical terms in this application.

Network sharing means any degree of cooperation in or sharing of telecommunication network infrastructure or network equipment among a plurality of operators or with third parties. The telecommunication network infrastructure includes site infrastructure such as site locations, equipment room facilities, towers, and power supply devices. The network equipment includes telecommunication network equipment such as base stations and core networks. Diversified sharing forms are presented between the plurality of operators. For example, the plurality of operators share the site infrastructure, and mobile virtual network operators (mobile virtual network operators, MVNOs) share access network and core network resources of mobile network operators (mobile network operators, MNOs). The operators share network resources by allowing national or international roaming. The operators construct wireless networks through joint ventures.

Access network sharing (RAN Sharing) is a type of network sharing. Generally, an operator deploys a PLMN and a corresponding core network in a geographical area. One core network can support one PLMN. When a terminal device accesses a PLMN after being powered on, the terminal device may obtain a communication service provided by a core network device deployed by an operator represented by the PLMN. In an access network sharing architecture, different operators may share one access network device, including: One access network device establishes communication connections to core networks of different operators.

Based on a case whether there is a direct communication interface between a core network device corresponding to a PLMN and an access network device, PLMNs may be classified into a roaming sharing PLMN and a non-roaming sharing PLMN.

The roaming sharing (roaming sharing) PLMN is also referred to as a roaming PLMN. There may be no direct communication interface between a core network device corresponding to a roaming sharing PLMN and an access network device, but a connection may be established to the access network device via another core network device that has a direct interface with the access network device. Further, the access network device may exchange information with the core network device corresponding to the roaming sharing PLMN. For example, the access network device exchanges information related to the roaming sharing PLMN with the core network device.

The non-roaming sharing PLMN is also referred to as a non-roaming PLMN. There is a direct communication interface between a core network device of a non-roaming sharing PLMN and an access device, and information may be directly exchanged between the two. In addition, because a communication interface may exist between core network devices, the core network device of the non-roaming sharing PLMN may provide an information forwarding service for a core network device of another PLMN (for example, the foregoing roaming sharing PLMN) supported by the access network device.

A cell in which a terminal device is located is a cell on which the terminal device camps, or a serving cell of the terminal device.

In this application, in a communication system, a plurality of operators share resources and services of one network based on a given policy and a current requirement. Specifically, a radio access network and a corresponding radio resource are included.

The technical solutions of this application can be applied to various communication systems, for example, a 5th generation (5th generation, 5G) mobile communication system, a new radio (new radio, NR) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a mobile communication system (for example, a 6G mobile communication system) after a 5G network, and a vehicle-to-everything (vehicle-to-everything, V2X) communication system.

A communication system to which this application is applicable includes a first access network device, a first core network device, and a second core network device. There may be a direct communication interface between the first access network device and the first core network device. There may be no direct communication interface between the first access network device and the second core network device. There may be a direct communication interface between the first core network device and the second core network device. For example, the first access network device is connected to the first core network device through an NG interface. The first access network device may establish a connection to the second core network device via the first core network device.

Optionally, the communication system further includes a terminal device, and the terminal device accesses a cell of the first access network device.

Optionally, the communication system further includes a second access network device. The second access network device is a neighboring access network device of the first access network device. Optionally, there may be no direct communication interface between the first access network device and the second access network device. For example, there is no Xn interface connected between the first access network device and the second access network device.

The following describes a possible communication system provided in this application.

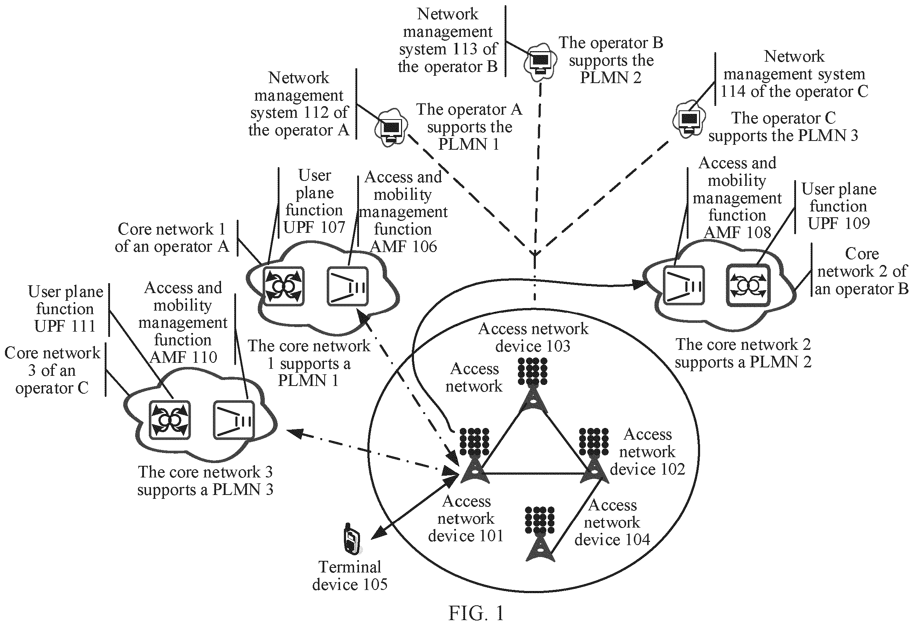

FIG. 1 is a diagram of a communication system according to an embodiment of this application. Refer to FIG. 1. The communication system includes a terminal device 105, an access network, a core network 1 of an operator A, a core network 2 of an operator B, a core network 3 of an operator C, a network management system 112 of the operator A, a network management system 113 of the operator B, and a network management system 114 of the operator C.

The access network includes an access network device 101, an access network device 102, an access network device 103, and an access network device 104. The operator A deploys the network management system 112 and the core network 1, the operator B deploys the network management system 113 and the core network 2, and the operator C deploys the network management system 114 and the core network 3. The operator A deploys a PLMN 1, the operator B deploys a PLMN 2, and the operator C deploys a PLMN 3. The core network 1 includes an access and management function (access and mobility management function, AMF) 106 and a user plane function (user plane function, UPF) 107. The core network 2 includes an AMF 108 and a UPF 109. The core network 3 includes an AMF 110 and a UPF 111.

The access network device 101 may be understood as the foregoing first access network device. The AMF 106 may be understood as the foregoing first core network device. There is a direct communication interface between the access network device 101 and the AMF 106. In other words, the access network device 101 is connected to the AMF 106 through an NG interface. Optionally, the terminal device 105 accesses a cell of the access network device 101.

The AMF 108 may be understood as the foregoing second core network device. There is no direct communication interface between the AMF 108 and the access network device 101. Because there is no NG interface connected between the AMF 108 and the access network device 101, the core network 2 may share the access network with the core network 1 in a roaming manner.

Specifically, the AMF 106 receives information about the core network 2 from the access network device 101. The AMF 106 may forward the information about the core network 2 to the AMF 108. In this way, the operator A and the operator B share the access network.

Optionally, the access network device 104 may be understood as the foregoing second access network device. There is no direct communication interface connected between the access network device 104 and the access network device 101. In other words, there is no Xn interface connected between the access network device 104 and the access network device 101.

It should be noted that the communication system shown in FIG. 1 is merely an example, and is not specifically limited to this application. In actual application, the access network in the communication system includes at least one access network device. The communication system includes core networks of a plurality of operators, and each core network includes at least one core network device, for example, the AMF and the UPF shown in FIG. 1.

The following describes an access network device, a terminal device, and a core network device that are provided in this application.

The terminal device is also referred to as user equipment (user equipment, UE), a mobile station (mobile station, MS), a mobile terminal (mobile terminal, MT), or the like. The terminal device is a device that includes a wireless communication function (providing voice/data connectivity to a user), for example, a handheld device or an in-vehicle device having a wireless connection function. Currently, the terminal device may include: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), or a wireless terminal in a smart home (smart home).

The access network device is an apparatus deployed in a radio access network for providing a wireless communication function for the terminal device. The access network device may include a base station. The base station includes a macro base station, a micro base station (also referred to as a small cell), a relay station, an access point (access point, AP), a wearable device, an in-vehicle device, and the like in various forms. The base station may further include a transmission reception point (transmission reception point, TRP), a transmission measurement function (transmission measurement function, TMF), and the like. For example, the base station in this application may be a base station in new radio (new radio, NR). The base station in 5G NR may further include a transmission reception point (transmission reception point, TRP), a transmission point (transmission point, TP), a next generation NodeB (next Generation NodeB, gNB), or an evolved NodeB (evolved NodeB, eNB or eNodeB) in a long term evolution (long term evolution, LTE) system.

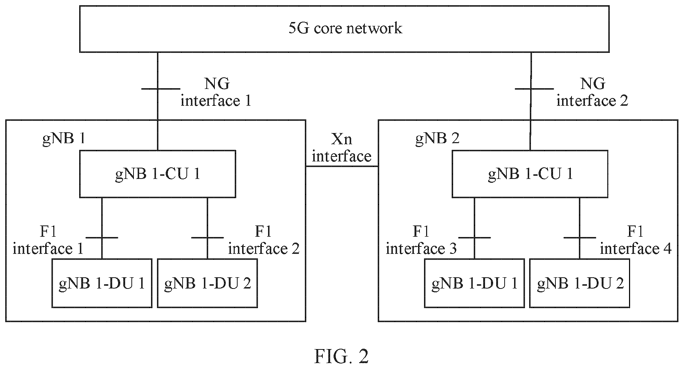

In some deployments, the access network device may include a central unit (central unit, CU) and a DU. The CU implements some functions of the access network device, and the DU implements some functions of the access network device. The following describes a possible structure of an access network device with reference to FIG. 2. An example in which the access network device is a gNB is used for description herein. This is also applicable to other types of access network devices.

FIG. 2 is a diagram of a structure of a gNB according to an embodiment of this application. Refer to FIG. 2. In a 5G communication system, gNBs are connected through an Xn interface, and a gNB is connected to a 5th generation mobile communication technology core network (5th generation mobile communication technology core network, 5GC) through an NG interface. As shown in FIG. 2, a gNB 1 and a gNB 2 are connected through the Xn interface. The gNB 1 is connected to the 5GC through an NG interface 1, and the gNB 2 is connected to the 5GC through an NG interface 2.

The gNB may include a CU and a DU. To be specific, functions of the base station are divided, some functions of the base station are deployed on the gNB-CU, and the remaining functions are deployed on the gNB-DU. The CU and the DU may be connected through an Fl interface. FIG. 2 is merely an example. One gNB-CU may be connected to one or more gNB-DUs. This is not specifically limited in this application.

The core network device in this application may be a core network device in a 4G core network, for example, a mobility management entity (mobility management entity, MME), or may be a core network device in a 5G core network, for example, an AMF, or may be a device that is in another core network and that is responsible for functions such as access control, registration management, service management, and mobility management for the terminal device to access a network.

In the communication system shown in FIG. 1, there is a direct communication interface connected between the access network device 101 and the AMF 106. There is no direct communication interface connected between the access network device 101 and the AMF 108. Therefore, how the core network 1 and the core network 2 share the access network device is a problem worth considering.

In addition, in this application, problems of maintaining, at the access network device 101, a correspondence between one or more PLMNs supported by the access network device 101 and a core network device and how to assist the terminal device in selecting a PLMN are further considered.

In this application, the first access network device may receive information A from the first core network device. The information A indicates the first access network device to associate with a first PLMN via the first core network device, so that the first access network device can establish, via the first core network device, a connection to the second core network device corresponding to the first PLMN, improving efficiency of communication between the first access network device and the second core network device. The core networks deployed by different operators communicate with the same access network device, implementing sharing of the access network by the operators.

The first PLMN is a PLMN supported by the second core network device, in other words, a PLMN served by the second core network device. For the first access network device, the first PLMN is a roaming sharing PLMN. In addition, the first core network device supports a second PLMN, and the second PLMN may be a non-roaming sharing PLMN. The first PLMN and the second PLMN are deployed by different operators.

There is a direct communication interface between the first access network device and the first core network device, but there is no direct communication interface between the first access network device and the second core network device. There is a direct communication interface between the first core network device and the second core network device. Therefore, the first access network device may exchange information about the first PLMN with the second core network device via the first core network device.

It should be noted that in the following descriptions, a core network device supporting a PLMN is referred to as a target core network device corresponding to the PLMN, and communication with an access network is performed via the target core network device corresponding to the PLMN, to provide a communication service for a terminal device accessing the PLMN. For an access network device, if the PLMN is a roaming sharing PLMN, a core network device used to forward information about the PLMN is referred to as a forwarding core network device corresponding to the PLMN. There is no direct communication interface connected between the target core network device corresponding to the roaming sharing PLMN and the access network device.

The following describes two possible implementations of the information A.

Implementation 1: The information A includes a correspondence between the first core network device and at least one PLMN that includes the first PLMN, and a correspondence between the first PLMN and the second core network device.

The at least one PLMN is a PLMN supported by the first access network device.

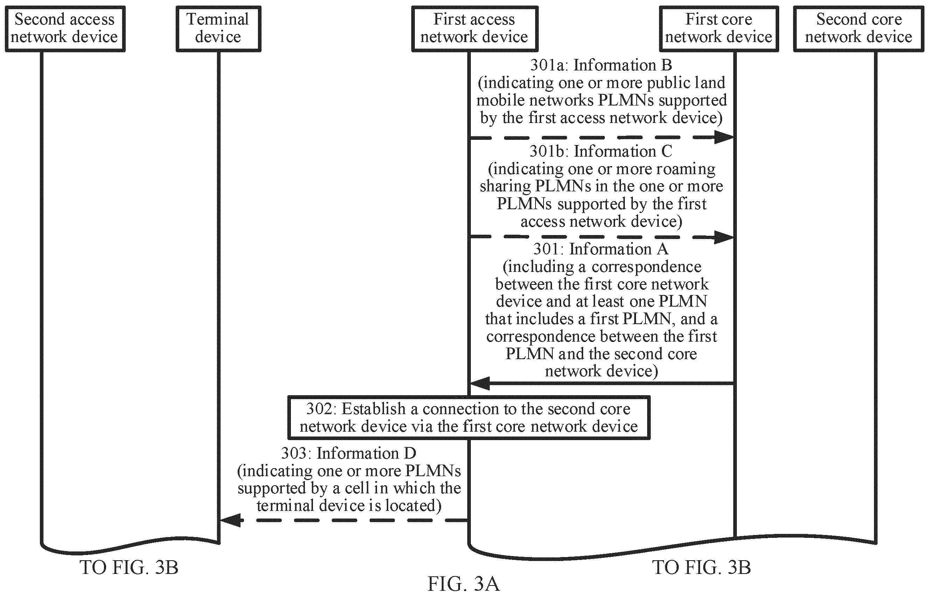

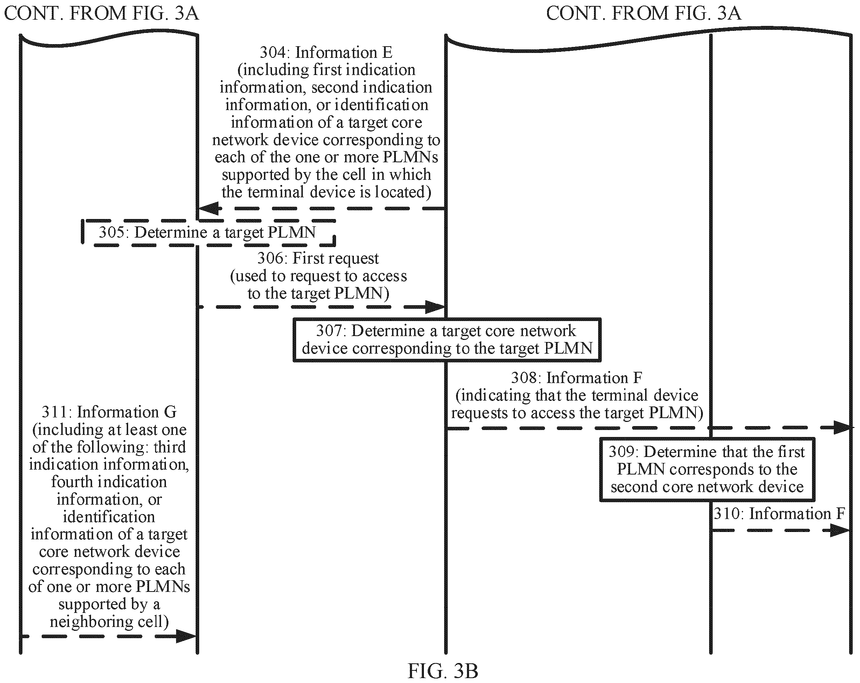

In this implementation, the first access network device may obtain the foregoing two correspondences. The first access network device learns of the correspondence between the first core network device and the at least one PLMN that includes the first PLMN. For a roaming sharing PLMN in the at least one PLMN, the first core network device may serve as a forwarding device to forward information about the roaming sharing PLMN. The first access network device may further learn of the correspondence between the first PLMN and the second core network device. There is a direct communication interface between the second core network device and the first core network device. The first access network device may establish the connection to the second core network device via the first core network device, and exchange the information about the first PLMN with the second core network device. For details, refer to related descriptions of the embodiment shown in FIG. 3A and FIG. 3B below.

Implementation 2: The information A includes a correspondence between the first core network device and at least one PLMN that includes the first PLMN.

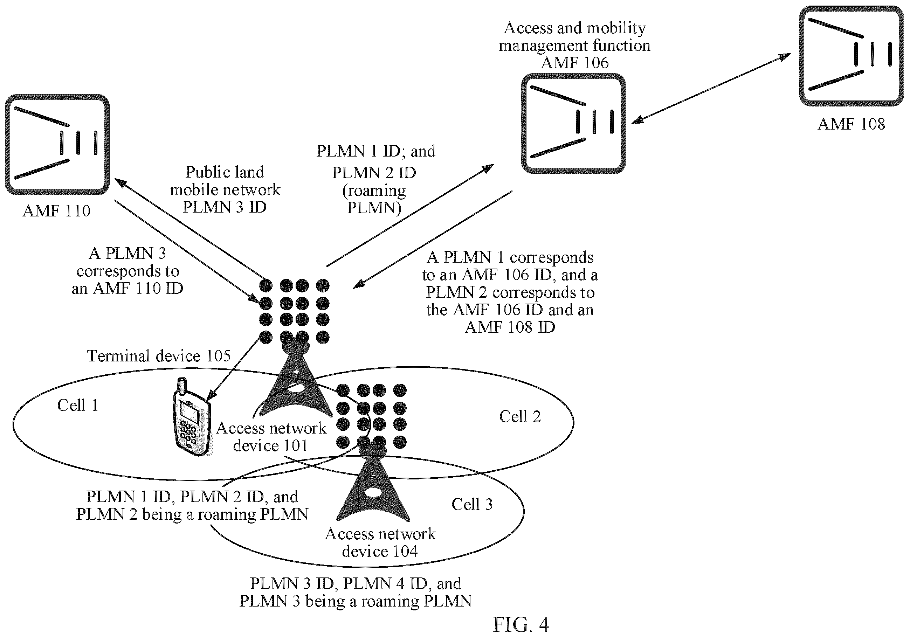

In this implementation, the first access network device does not sense that the first PLMN is a roaming sharing PLMN. From the perspective of the first access network device, the first PLMN is a PLMN of the first core network device, in other words, the first PLMN is a PLMN supported by the first core network device. For details, refer to related descriptions of the embodiment shown in FIG. 4.

The technical solutions of this application are described below with reference to specific embodiments.

FIG. 3A and FIG. 3B are a diagram of an embodiment of a communication method according to an embodiment of this application. Refer to FIG. 3A and FIG. 3B. The communication method includes the following steps.

301: A first core network device sends information A to a first access network device. The information A includes a correspondence between the first core network device and at least one PLMN that includes a first PLMN, and a correspondence between the first PLMN and a second core network device. Correspondingly, the first access network device receives the information A from the first core network device.

The at least one PLMN belongs to one or more PLMNs supported by the first access network device, each PLMN represents an operator, and the first PLMN corresponds to the second core network device. The second core network device may be understood as a target core network device corresponding to the first PLMN.

For example, as shown in FIG. 1, the first access network device is the access network device 101. The network management system configures the access network device 101 to support the PLMN 1, the PLMN 2, and the PLMN 3. It is assumed that the first core network device is the AMF 106, and the core network 1 in which the AMF 106 is located supports the PLMN 1. Because there is a direct communication interface between the AMF 106 and the AMF 108, the access network device 101 may establish a connection to the AMF 108 via the AMF 106. Because the core network 2 in which the AMF 108 is located supports the PLMN 2, it may be considered that the AMF 106 corresponds to the PLMN 2. The AMF 106 may send a correspondence between the AMF 106 and each of the PLMN 1 and the PLMN 2 to the access network device 101.

For the first access network device, the first PLMN is a roaming sharing PLMN. That the first PLMN corresponds to the first core network device and the second core network device includes: The first core network device is a forwarding core network device corresponding to the first PLMN, and the second core network device is a target core network device corresponding to the first PLMN.

In a possible implementation, the first core network device may send a globally unique access and management function identifier (globally unique AMF identifier, GUAMI) list to the first access network device, and the GUAMI list indicates the correspondence between the first core network device and the at least one PLMN including the first PLMN, and the correspondence between the first PLMN and the second core network device.

For example, the at least one PLMN includes the PLMN 1 and the PLMN 2. The PLMN 2 is the foregoing first PLMN. To be specific, the PLMN 2 is a roaming sharing PLMN of the first access network device, and the PLMN 2 is a PLMN of the second core network device, in other words, the PLMN 2 is a PLMN supported by the second core network device. In addition, the PLMN 1 is a non-roaming sharing PLMN of the first access network device, and the PLMN 1 is a PLMN of the first core network device, in other words, the PLMN 1 is a PLMN supported by the first core network device.

For example, as shown in FIG. 4, the first core network device is an AMF 106, and the second core network device is an AMF 108. An identifier of the first core network device is represented as an AMF 106 ID, and an identifier of the second core network device is represented as an AMF 108 ID. The GUAMI list delivered by the first core network device to the first access network device may be shown in Table 1:

**Table 1**

| Identifier of a PLMN | Identifier of a forwarding core network device | Identifier of a target core network device |
|---|---|---|
| PLMN 1 ID | (Blank) | AMF 106 ID |
| PLMN 2 ID | AMF 106 ID | AMF 108 ID |

In other words, a roaming sharing PLMN corresponds to a forwarding core network device and a target core network device.

For example, as shown in FIG. 4, the first core network device is the AMF 106, the second core network device is the AMF 108, and the first access network device is an access network device 101. The AMF 106 sends the following information to the access network device 101: the PLMN 1 corresponds to the AMF 106 ID, and the PLMN 2 corresponds to the AMF 106 ID and the AMF 108 ID.

It can be learned that the first core network device may deliver the foregoing information A to the first access network device. In this way, the first access network device maintains the correspondence between the first core network device and the at least one PLMN including the first PLMN, and the correspondence between the first PLMN and the second core network device. Therefore, the first access network device subsequently provides the correspondences for the terminal device in a timely manner, to assist the terminal device in selecting a suitable PLMN for access.

In a possible implementation, the first core network device may actively send the information A to the first access network device.

In this implementation, the information A may be carried in a paging message or an access and mobility management function configuration update (AMF configuration update) message. The first core network device actively delivers the information A, so that signaling overheads can be reduced.

In another possible implementation, the first core network device may send the information A to the first access network device based on information that is about a PLMN supported by the first access network device and that is reported by the first access network device. In this implementation, for a carrier that carries the information A, refer to related descriptions in step 301a below.

It should be noted that optionally, if the first access network device uses the structure shown in FIG. 2, the access network device includes a CU and a DU. Based on this implementation, step 301 specifically includes: The first core network device sends the information A to the CU. Correspondingly, the CU receives the information A from the first core network device.

Optionally, the embodiment shown in FIG. 3A and FIG. 3B further includes step 301a. Step 301a may be performed before step 301.

301a: The first access network device sends information B to the first core network device. The information B indicates the one or more PLMNs supported by the first access network device. Correspondingly, the first core network device receives the information B from the first access network device.

For example, as shown in FIG. 1, the first access network device is the access network device 101, and the first core network device is the AMF 106. The network management system 112 configures, for the access network device 101, one or more PLMNs supported by the access network device 101. The one or more PLMNs include the PLMN 1, the PLMN 2, and the PLMN 3. The network management system 112 sends identifiers of the one or more PLMNs to the access network device 101. The access network device 101 may send the information B to the AMF 106. The information B indicates the identifiers of the PLMN 1, the PLMN 2, and the PLMN 3 that are supported by the access network device 101.

It should be noted that, if the access network device 101 obtains, from the AMF 106, a correspondence between the PLMN 1 and the AMF 106, and a correspondence between the PLMN 2 and each of the AMF 106 the AMF 108, for a PLMN whose correspondence has been determined, the access network device 101 may no longer need to send an identifier of the PLMN to another AMF, for example, the AMF 110, that is connected to the access network device 101 through a direct communication interface. In other words, the access network device 101 may send only the identifier of the PLMN 3 to the AMF 110.

Optionally, if the first access network device uses the structure shown in FIG. 2, the access network device includes a CU and a DU. Based on this implementation, the network management system configures, for the first access network device, one or more PLMNs supported by the first access network device. The network management system sends identifiers of the one or more PLMNs to the DU. The DU sends the identities of the one or more PLMNs to the CU. Optionally, step 301a includes: The CU sends the information B to the first core network device. Correspondingly, the first core network device receives the information B from the CU.

The following describes some possible transmission manners for carrying the information B.

Implementation 1: The information B is carried in an NG setup request (NG setup request) message.

In this implementation, correspondingly, the information A in step 301 is carried in an NG setup response (NG setup response) message.

Specifically, the first access network device may be understood as a newly established site, and the newly established site may mean that no NG setup process is executed between the first access network device and a core network. Subsequently, the first access network device needs to execute the NG setup process with the core network. The network management system configures one or more PLMNs for the first access network device. The one or more PLMNs include the first PLMN. The first access network device determines, based on the processes in step 301 and step 301 a, that the first PLMN corresponds to the first core network device and the second core network device.

Implementation 2: The information B is carried in an access network configuration update (RAN configuration update) message.

In this implementation, correspondingly, the information A in step 301 is carried in an access network configuration update acknowledgment (RAN configuration update acknowledge) message.

Specifically, the network management system modifies PLMNs supported by the first access network device. For example, the first PLMN is newly added to the PLMNs supported by the first access network device. The first access network device may determine, based on the step 301 and step 301 a, that the first PLMN corresponds to the first core network device and the second core network device.

Optionally, the embodiment shown in FIG. 3A and FIG. 3B further includes step 301b. Step 301b may be performed before step 301.

301b: The first access network device sends information C to the first core network device. The information C indicates one or more roaming sharing PLMNs in the one or more PLMNs supported by the first access network device. Correspondingly, the first core network device receives the information C from the first access network device.

For example, as shown in FIG. 4, the first access network device is the access network device 101, and the first core network device is the AMF 106. The one or more PLMNs supported by the access network device 101 include the PLMN 1, the PLMN 2, and the PLMN 3. The PLMN 2 is a roaming sharing PLMN. The access network device 101 sends the information C to the AMF 106, where the information C indicates that the PLMN 2 is a roaming sharing PLMN.

Optionally, the first core network device may simultaneously send the information B and the information C, or may separately send the information B and the information C. This is not specifically limited in this application.

Optionally, the information B and the information C may be carried in a same message or different messages. This is not specifically limited in this application. For example, both the information B and the information C are carried in an NG setup request message or an access network configuration update message.

It should be noted that optionally, if the first access network device uses the structure shown in FIG. 2, the access network device includes a CU and a DU. Optionally, step 301b specifically includes: The CU sends the information C to the first core network device. Correspondingly, the first core network device receives the information C from the CU.

It should be noted that the first access network device may perform only step 301a, or may perform only step 301b, or the first access network device may perform both step 301a and step 301b. This is not specifically limited in this application.

It should be noted that when the first access network device performs both step 301a and step 301b, there is no fixed execution sequence between step 301a and step 301b. Specifically, step 301a may be performed before step 301b; or step 301b is performed before step 301a; or step 301a and step 301b are simultaneously performed based on a situation. This is not specifically limited in this application.

302: The first access network device establishes a connection to the second core network device via the first core network device.

Specifically, the first access network device determines, based on first information, that the first access network device is associated with the first PLMN via the first core network device. The first PLMN corresponds to the second core network device. Optionally, that the first access network device establishes a connection to the second core network device via the first core network device includes: The first access network device sends control plane information related to the first PLMN to the first core network device. For example, the control plane information includes at least one of the following: an identifier of the first PLMN, an identifier and a name of the first access network device, and a default paging cycle of the first access network device. The first core network device sends the control plane information to the second core network device, to establish the connection between the first access network device and the second core network device. Further, the first access network device may exchange information with the second core network device. For example, the first access network device sends a UE context of the terminal device to the second core network device via the first core network device, to request the terminal device to access the first PLMN.

Optionally, the embodiment shown in FIG. 3A and FIG. 3B further includes step 303. Step 303 may be performed after step 301.

303: The first access network device sends information D to the terminal device. The information D indicates one or more PLMNs supported by a cell in which the terminal device is located. Correspondingly, the terminal device receives the information D from the first access network device.

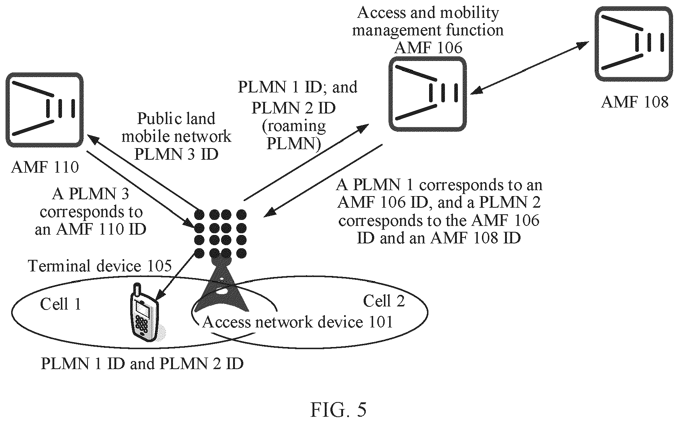

For example, as shown in FIG. 4 or FIG. 5, the first access network device is an access network device 101. A terminal device 105 is located in a cell 1 of the access network device 101, and the cell 1 supports a PLMN 1 and a PLMN 2. The access network device 101 sends the information D to the terminal device 105. The information D includes an identifier of the PLMN 1 (shown as a PLMN 1 ID in the figure) and an identifier of the PLMN 2 (shown as a PLMN 2 ID in the figure).

Optionally, the information D is carried in a broadcast message. For example, the information D is carried in a SIB1 message.

Optionally, the one or more PLMNs supported by the cell in which the terminal device is located include the first PLMN, and the information D includes the identifier of the first PLMN.

It should be noted that the one or more PLMNs supported by the first access network device are configured by the network management system. For example, PLMNs supported by the first access network device that are configured by the network management system include the PLMN 1, the PLMN 2, and the PLMN 3. Further, PLMNs supported by each cell of the first access network device may also be configured by the network management system. For example, the first access network device manages a cell 1 and a cell 2, and the network management system configures the cell 1 to support the PLMN 1 and the PLMN 2, and configures the cell 2 to support the PLMN 3. It can be learned that the PLMNs supported by each cell of the first access network device are the PLMNs supported by the first access network device.

Optionally, the embodiment shown in FIG. 3A and FIG. 3B further includes step 304. Step 304 may be performed after step 301.

304: The first access network device sends information E to the terminal device. The information E includes at least one of the following: first indication information, second indication information, or identification information of a target core network device corresponding to each of the one or more PLMNs supported by the cell in which the terminal device is located. Correspondingly, the terminal device receives the information E from the first access network device.

The first indication information indicates whether the one or more PLMNs supported by the cell in which the terminal device is located are roaming sharing PLMNs. The second indication information indicates whether there is a direct communication interface between the first access network device and the target core network device corresponding to each of the one or more PLMNs supported by the cell in which the terminal device is located.

Optionally, the one or more PLMNs supported by the cell in which the terminal device is located include the first PLMN. The information E includes at least one of the following: the first indication information indicating that the first PLMN is a roaming sharing PLMN, identification information of the second core network device corresponding to the first PLMN, and the second indication information indicating that there is no direct communication interface between the second core network device and the first access network device.

For example, as shown in FIG. 4, the first access network device is the access network device 101, the first core network device is the AMF 106, and the second core network device is the AMF 108. The terminal device is located in the cell 1 of the access network device 101. The access network device 101 sends first indication information to the terminal device, where the first indication information indicates that the PLMN 1 is a non-roaming sharing PLMN and the PLMN 2 is a roaming sharing PLMN. Optionally, the identifier of the AMF 106 is represented as the AMF 106 ID, and the identifier of the AMF 108 is represented as the AMF 108 ID. The access network device 101 may further indicate, to the terminal device, the AMF 106 ID corresponding to the PLMN 1, and the AMF 106 ID and the AMF 108 ID that correspond to the PLMN 2. The access network device 101 may further send second indication information to the terminal device. The second indication information indicates that there is a direct communication interface between the AMF 106 corresponding to the PLMN 1 and the access network device 101, and there is no direct communication interface between the AMF 108 corresponding to the PLMN 2 and the access network device 101.

It should be noted that the first access network device may send only the information D, or the first access network device may send both the information D and the information E. This is not specifically limited in this application.

Optionally, when the first access network device sends both the information D and the information E, the information D and the information E may be carried in a same message or different messages. This is not specifically limited in this application. For example, the information D and the information E are carried in a same broadcast message.

Optionally, the information D is carried in a SIB 1 message. For example, the SIB 1 message includes a PLMN identity information list (PLMN-IdentityInfoList) in cell access related information (CellAccessRelatedInfo). The information D may be carried in PLMN identity information (PLMN-IdentityInfo) in the PLMN identity information list.

It should be noted that the first access network device may perform only step 303, or may perform step 303 and step 304. This is not specifically limited in this application. For the solution in which the first access network device performs step 303 and step 304, there is no fixed execution sequence between step 303 and step 304. Step 303 may be performed before step 304; or step 304 is performed before step 303; or step 303 and step 304 are simultaneously performed based on a situation. This is not specifically limited in this application.

In the scenario shown in FIG. 4, the access network device 101 delivers the information D and the information E to the terminal device. The terminal device may sense that the first PLMN is a roaming sharing PLMN. However, in the scenario shown in FIG. 5, the access network device 101 delivers only the information D to the terminal device, and the terminal device does not sense that the first PLMN is a roaming sharing PLMN.

Optionally, the embodiment shown in FIG. 3A and FIG. 3B further includes step 305 to step 308.

305: The terminal device determines a target PLMN.

In a possible implementation, step 305 to step 308 may be performed after step 303.

In this implementation, based on step 303, optionally, step 305 includes: The terminal device determines, based on the information D, the one or more PLMNs supported by the cell in which the terminal device is located; and determines the target PLMN from the one or more PLMNs supported by the cell in which the terminal device is located.

Optionally, the terminal device determines, based on at least one of capability information of supporting a PLMN by the terminal device and preference information of the terminal device for a PLMN, the target PLMN from the one or more PLMNs supported by the cell in which the terminal device is located. This helps the terminal device select a suitable PLMN. For example, the capability information of supporting a PLMN by the terminal device includes that the terminal device supports the PLMN 1 and the PLMN 2, but does not support the PLMN 3. In this case, the terminal device may select the PLMN 1 or the PLMN 2 as a candidate target PLMN. Further, the preference information of the terminal device for a PLMN includes that the terminal device prefers a PLMN with low use costs per unit time. For example, the PLMN 1 has good signal quality, but high use costs per unit time. The PLMN 2 has average signal quality, but low use costs per unit time. The terminal device may select the PLMN 1 as the target PLMN based on the preference information of the terminal device for a PLMN.

In another possible implementation, step 305 to step 308 may be performed after step 304.

In this implementation, based on step 303 and step 304, optionally, step 305 includes: The terminal device determines the target PLMN based on the information D and the information E.

Optionally, the terminal device determines the target PLMN based on the information D, the information E, the capability information of supporting a PLMN by the terminal device, and/or the preference information of the terminal device for a PLMN.

For example, the capability information of supporting a PLMN by the terminal device includes that the terminal device can access a roaming sharing PLMN only in a cell in which the terminal device is located. The preference information of the terminal device for a PLMN includes indication information indicating that the terminal device prefers to access a roaming sharing PLMN, or that the terminal device prefers to access a specific roaming sharing PLMN. The terminal device determines, based on the information D, the one or more PLMNs supported by the cell in which the terminal device is located, and determines, based on the information E, roaming sharing PLMNs in the one or more PLMNs supported by the cell in which the terminal device is located, to select a roaming sharing PLMN as the target PLMN based on the capability information of supporting a PLMN and the preference information.

For another example, the capability information of supporting a PLMN by the terminal device includes that the terminal device can access a roaming sharing PLMN only in the cell in which the terminal device is located. The preference information of the terminal device includes that the terminal device prefers to access a PLMN with good signal quality. The terminal device determines, based on the information D, that the cell in which the terminal device is located supports the PLMN 2 and a PLMN 4, and determines, based on the information E, that both the PLMN 2 and the PLMN 4 are roaming sharing PLMNs. The PLMN 2 has good signal quality, but high use costs per unit time. The PLMN 4 has average signal quality, but low use costs per unit time. The terminal device may select the PLMN 2 as the target PLMN based on the capability information and the preference information.

In the foregoing implementation, in the process in which the terminal device selects the target PLMN, the capability information of supporting a PLMN by the terminal device and the preference information of the terminal device for a PLMN are comprehensively considered, and the related information of the PLMN indicated by the access network device is used to assist the terminal device in selecting a suitable PLMN, improving communication quality.

306: The terminal device sends a first request to the first access network device. The first request is used to request to access the target PLMN. Correspondingly, the first access network device receives the first request from the terminal device.

The first request includes an identifier of the target PLMN.

Optionally, the first request is carried in a radio resource control setup complete (RRC setup complete) message.

It should be noted that steps 303 to 306 may be independently used as an embodiment, that is, steps 303 to 306 may be decoupled from other steps in this embodiment. Alternatively, step 303, step 305, and step 306 may be independently used as an embodiment, that is, step 303, step 305, and step 306 may be decoupled from other steps in this embodiment.

307: The first access network device determines a target core network device corresponding to the target PLMN.

Optionally, the first access network device determines, based on the information A, that the target PLMN corresponds to the target core network device.

For example, as shown in Table 1 and FIG. 4, the first access network device is the access network device 101, and the first core network device is the AMF 106. If the target PLMN is the PLMN 1, the first access network device may determine that the PLMN 1 corresponds to the AMF 106. In other words, the target core network device is the AMF 106 (namely, the first core network device).

For another example, as shown in Table 1 and FIG. 4, if the target PLMN is the PLMN 2, the first access network device may determine that the PLMN 2 corresponds to the AMF 108. In other words, the target core network device is the AMF 108 (namely, the second core network device).

308: The first access network device sends information F to the target core network device. The information F indicates that the terminal device requests to access the target PLMN. Correspondingly, the target core network device receives the information F from the first access network device.

In a possible implementation, the information F includes the identifier of the target PLMN.

For example, the first access network device is the access network device 101, and the first core network device is the AMF 106. The target PLMN is the PLMN 1, and the PLMN 1 corresponds to the AMF 106. In this case, the first access network device sends the information F including the PLMN 1 ID to the AMF 106.

Optionally, if the target PLMN is the first PLMN, the target core network device is the second core network device. Step 308 includes:
The first access network device sends the information F to the second core network device via the first core network device.

Specifically, the first access network device sends the information F to the first core network device. Therefore, the first core network device forwards the information F to the second core network device.

Optionally, the information F further includes the identification information of the second core network device corresponding to the first PLMN.

For example, the first access network device is the access network device 101, the first core network device is the AMF 106, and the second core network device is the AMF 108. The target PLMN is the PLMN 2. In this case, the first access network device sends the information F to the AMF 108 via the AMF 106.

Optionally, the information F is carried in initial user equipment information.

When the target PLMN is the first PLMN, optionally, the embodiment shown in FIG. 3A and FIG. 3B further includes step 309 and step 310.

309: The first core network device determines that the first PLMN corresponds to the second core network device.

Specifically, the second core network device determines the first PLMN based on the information F, and determines that the first PLMN corresponds to the second core network device.

The following describes two possible implementations in which the first core network device determines that the first PLMN corresponds to the second core network device.

1. The first core network device determines, based on the information A, that the first PLMN corresponds to the second core network device.

For example, as shown in Table 1 and FIG. 4, the first core network device is the AMF 106, the first PLMN is the PLMN 2, and the AMF 106 may determine, by using Table 1, the AMF 108 corresponding to the PLMN 2.

2. The information F includes the identification information of the second core network device corresponding to the first PLMN. The first core network device determines, based on the information F, that the first PLMN corresponds to the second core network device.

For example, as shown in FIG. 5, the first core network device is the AMF 106, the second core network device is the AMF 108, and the identifier of the AMF 108 is represented as the AMF 108 ID. The information F includes the AMF 108 ID, and the AMF 106 may determine that the PLMN 2 corresponds to the AMF 108.

310: The first core network device sends the information F to the second core network device. Correspondingly, the second core network device receives the information F from the first core network device.

Specifically, after the first core network device receives the information F sent by the first access network device, the first core network device determines that the first PLMN corresponds to the second core network device, so that the first core network device may forward the information F to the second core network device.

For example, as shown in FIG. 4 or FIG. 5, the first core network device is the AMF 106, and the second core network device is the AMF 108. The AMF 106 forwards the information F to the AMF 108.

It can be learned that the first access network device establishes the connection to the second core network device via the first core network device, so that the first access network device can exchange information with the second core network device via the first core network device. This improves efficiency of communication between the first access network device and the second core network device, and improves a communication mechanism for access network sharing.

Optionally, the embodiment shown in FIG. 3A and FIG. 3B further includes step 311.

311: The second access network device sends information G to the terminal device. The information G includes at least one of the following: third indication information, fourth indication information, or identification information of a target core network device corresponding to each of one or more PLMNs supported by a neighboring cell. Correspondingly, the terminal device receives the information G from the second access network device.

The neighboring cell is a neighboring cell of the cell in which the terminal device is located, and the second access network device manages the neighboring cell. The second access network device may be used as a neighboring access network device of the foregoing first access network device.

The third indication information indicates whether the one or more PLMNs supported by the neighboring cell are roaming sharing PLMNs. The fourth indication information indicates whether there is a direct communication interface between the second access network device and the target core network device corresponding to each of the one or more PLMNs supported by the neighboring cell.

Optionally, there is no direct communication interface between the second access network device and the first access network device.

Optionally, the information G is carried in a broadcast message. For example, the information G is carried in a SIB 1 message of the second access network device.

For example, as shown in FIG. 4, the first access network device is the access network device 101, and the second access network device is the access network device 104. A cell in which the terminal device 105 is located is the cell 1, a cell 3 is a neighboring cell of the cell 1, and the cell 3 is a cell managed by the access network device 104. The access network device 104 may broadcast the information G, where the information G includes at least one of the following: first indication information indicating that the PLMN 3 supported by the cell 3 is a roaming sharing PLMN and that the PLMN 4 supported by the cell 3 is a non-roaming sharing PLMN, second indication information indicating that there is a direct communication interface between a target core network device corresponding to the PLMN 3 and the access network device 104 and there is no direct communication interface between a target core network device corresponding to the PLMN 4 and the access network device 104, and identifiers of the target core network devices respectively corresponding to the PLMN 3 and the PLMN 4. After the terminal device 105 receives the information G, the terminal device 105 may send the information G to the access network device 101.

It can be learned that when the terminal device performs a cell handover, the terminal device requests, from the first access network device, related information of a PLMN supported by a cell to which the terminal device is to be handed over. This helps the terminal device select a suitable PLMN for access.

It should be noted that there is no fixed execution sequence between step 311 and step 301 to step 310. Any one or more of step 301 to step 310 may be performed before step 311; or step 311 is performed before any one or more of step 301 to step 310. Alternatively, any one or more of step 301 to step 310 and step 311 are simultaneously performed based on a situation. This is not specifically limited in this application.

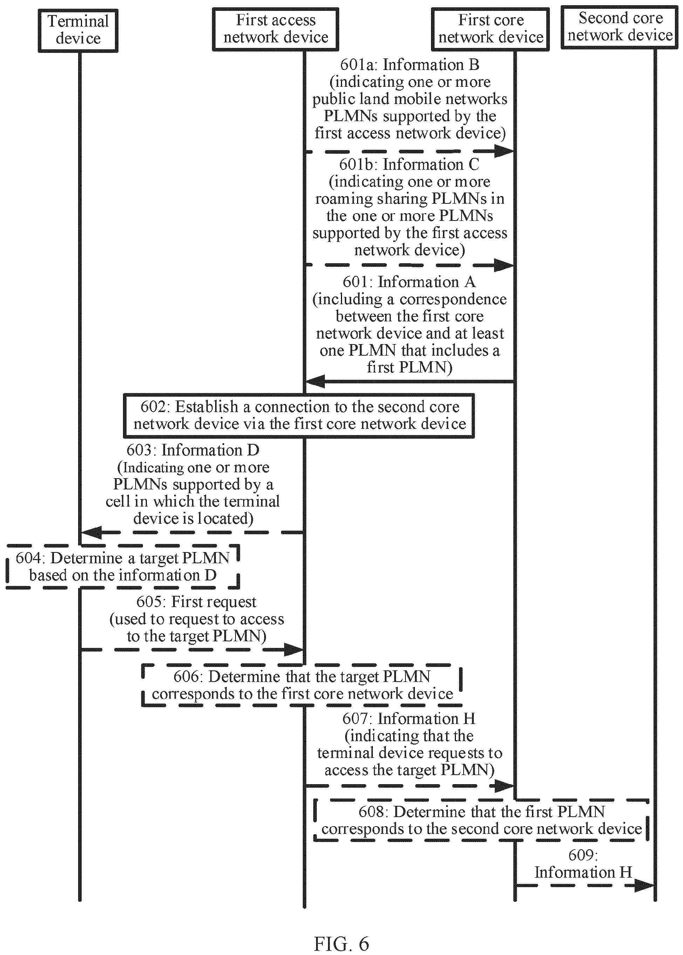

FIG. 6 is a diagram of another embodiment of a communication method according to an embodiment of this application. Refer to FIG. 6. The communication method includes the following steps.

601: A first core network device sends information A to a first access network device. The information A includes a correspondence between the first core network device and at least one PLMN that includes a first PLMN. Correspondingly, the first access network device receives the information A from the first core network device.

For the first PLMN, the at least one PLMN, and the correspondence between the first core network device and the at least one PLMN that includes the first PLMN, refer to related descriptions of step 301 in the embodiment shown in FIG. 3A and FIG. 3B. Details are not described herein again.

For a manner of sending the information A, refer to related descriptions in the embodiment in FIG. 3A and FIG. 3B. Details are not described herein again.

In step 601, the information A does not include a correspondence between the first PLMN and a second core network device.

It should be noted that optionally, if the first access network device uses the structure shown in FIG. 2, the access network device includes a CU and a DU. Based on this implementation, step 601 specifically includes: The first core network device sends the information A to the CU. Correspondingly, the CU receives the information A from the first core network device.

Optionally, the embodiment shown in FIG. 6 further includes step 601a. Step 601a may be performed before step 601.

601a: The first access network device sends information B to the first core network device. The information B indicates one or more PLMNs indicated by the first access network device. Correspondingly, the first core network device receives the information B from the first access network device.

Optionally, the embodiment shown in FIG. 6 further includes step 601b. Step 601b may be performed before step 601.

601b: The first access network device sends information C to the first core network device. The information C indicates one or more roaming sharing PLMNs in the one or more PLMNs supported by the first access network device. Correspondingly, the first core network device receives the information C from the first access network device.

Step 601a and step 601b are similar to step 301a and step 301b in the embodiment shown in FIG. 3A and FIG. 3B. For details, refer to related descriptions of step 301a and step 301b in the embodiment shown in FIG. 3A and FIG. 3B.

602: The first access network device establishes a connection to the second core network device via the first core network device.

Step 602 is similar to step 302 in the embodiment shown in FIG. 3A and FIG. 3B. For details, refer to related descriptions of step 302 in the embodiment shown in FIG. 3A and FIG. 3B.

Optionally, the embodiment shown in FIG. 6 further includes step 603 to step 607.

603: The first access network device sends information D to the terminal device. The information D indicates one or more PLMNs supported by a cell in which the terminal device is located. Correspondingly, the terminal device receives the information D from the first access network device.

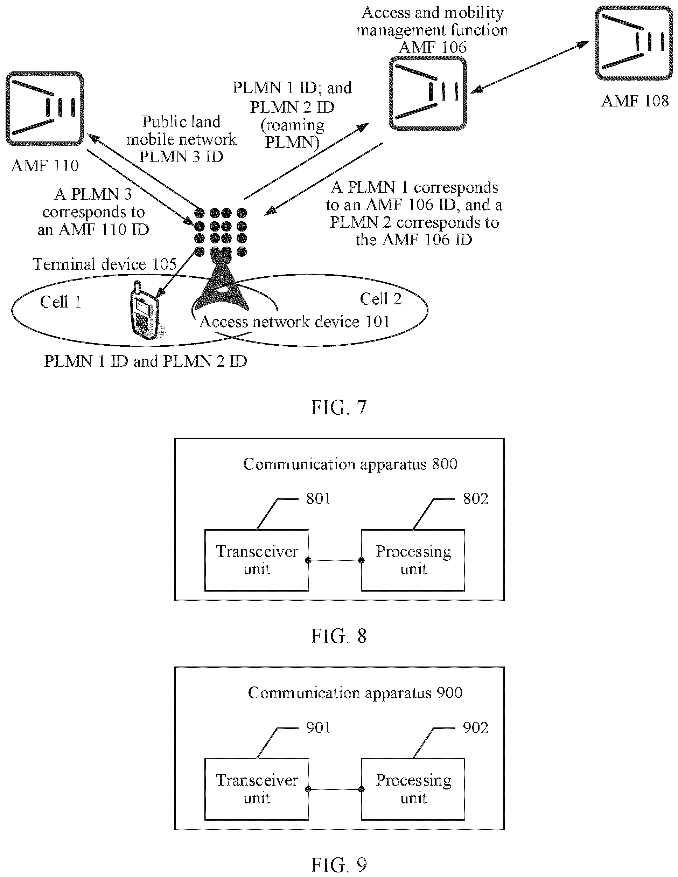

For example, as shown in FIG. 7, the first access network device is an access network device 101. A terminal device 105 is located in a cell 1 of the access network device 101, and the cell 1 supports a PLMN 1 and a PLMN 2. The access network device 101 sends the information D to the terminal device 105, where the information D includes a PLMN 1 ID and a PLMN 2 ID.

Step 603 is similar to step 303 in the embodiment shown in FIG. 3A and FIG. 3B. For details, refer to related descriptions of step 303 in the embodiment shown in FIG. 3A and FIG. 3B. Details are not described herein again.

604: The terminal device determines a target PLMN based on the information D.

Specifically, the terminal device determines, based on the information D, the one or more PLMNs supported by the cell in which the terminal device is located. The terminal device selects the target PLMN from the one or more PLMNs.

Optionally, the terminal device determines, based on at least one of capability information of supporting a PLMN by the terminal device and preference information of the terminal device for a PLMN, the target PLMN from the one or more PLMNs supported by the cell in which the terminal device is located. For beneficial effects of this implementation, refer to related descriptions of the embodiment shown in FIG. 3A and FIG. 3B.

605: The terminal device sends a first request to the first access network device. Correspondingly, the first access network device receives the first request from the terminal device.

The first request is used by the terminal device to request to access the target PLMN.

A carrier that carries the first request is similar to the carrier that carries the first request in step 306 in the embodiment shown in FIG. 3A and FIG. 3B. For details, refer to the foregoing related descriptions.

606: The first access network device determines that the target PLMN corresponds to the first core network device.

For example, the target PLMN is the PLMN 2, and the first access network device determines, based on the information A, that the PLMN 2 corresponds to the first core network device.

607: The first access network device sends information H to the first core device. The information H indicates that the terminal device requests to access the target PLMN. Correspondingly, the first core network device receives the information H from the first access network device.

The information H includes an identifier of the target PLMN. Optionally, the information H is carried in initial user equipment information.

Optionally, if the target PLMN is the first PLMN, the embodiment shown in FIG. 6 further includes step 608 and step 609. Step 608 and step 609 may be performed after step 607.

608: The first core network device determines that the first PLMN corresponds to the second core network device.

Specifically, the first core network device may determine, based on a correspondence between the first PLMN and the second core network device, that the first PLMN corresponds to the second core network device. To be specific, the first PLMN is a PLMN of the second core network device, in other words, the first PLMN is served by the second core network device.

609: The first core network device sends the information H to the second core network device. Correspondingly, the second core network device receives the information H from the first core network device.

Specifically, after the first core network device receives the information H sent by the first access network device, the first core network device determines that the first PLMN corresponds to the second core network device. The first core network device may forward the information H to the second core network device.

For example, as shown in FIG. 7, the first core network device is an AMF 106, and the second core network device is an AMF 108. The AMF 106 forwards the information H to the AMF 108.

It can be learned that the first access network device may establish the connection to the second core network device via the first core network device. In this way, information about the first PLMN can be exchanged between the first access network device and the second core network device. For example, the first access network device only needs to forward the information about the first PLMN to the first core network device corresponding to the first PLMN. The first access network device does not need to sense whether the first PLMN is a roaming sharing PLMN. Therefore, a requirement on a capability of the first access network device is low, and a processing procedure on the access network side is simplified.

It may be understood that the foregoing method embodiments shown in FIG. 3A and FIG. 3B and FIG. 6 may be separately implemented, or may be implemented in combination. For terms and conventional technologies in embodiments, refer to each other.

The following describes a communication apparatus provided in this application. FIG. 8 is a diagram of a structure of a communication apparatus 800 according to an embodiment of this application. The communication apparatus 800 may be configured to perform the steps performed by the first access network device in the embodiments shown in FIG. 3A and FIG. 3B and FIG. 6. For details, refer to the related descriptions in the foregoing method embodiments.

The communication apparatus 800 includes a transceiver unit 801 and a processing unit 802. The transceiver unit 801 may implement a corresponding communication function, and the transceiver unit 801 may also be referred to as a communication interface or a communication unit. The processing unit 802 is configured to perform a processing operation.

Optionally, the communication apparatus 800 may further include a storage unit. The storage unit may be configured to store instructions and/or data. The processing unit 802 may read the instructions and/or the data in the storage unit, to enable the communication apparatus to implement the method embodiments shown in FIG. 3A and FIG. 3B and FIG. 6.

The communication apparatus 800 may be configured to perform an action performed by the first access network device in the foregoing method embodiments. The communication apparatus 800 may be the first access network device or a component that can be configured in the first access network device. The transceiver unit 801 is configured to perform a receiving-related operation on the first access network device side in the foregoing method embodiments, and the processing unit 802 is configured to perform a processing-related operation on the first access network device side in the foregoing method embodiments.

Optionally, the transceiver unit 801 may include a sending unit and a receiving unit. The sending unit is configured to perform a sending operation of the first access network device in the method embodiments shown in FIG. 3A and FIG. 3B and FIG. 6. The receiving unit is configured to perform a receiving operation of the first access network device in the method embodiments shown in FIG. 3A and FIG. 3B and FIG. 6.

It should be noted that the communication apparatus 800 may include the sending unit, but does not include the receiving unit. Alternatively, the communication apparatus 800 may include the receiving unit, but does not include the sending unit. This may be specifically determined depending on whether the foregoing solution performed by the communication apparatus 800 includes a sending action and a receiving action.

The transceiver unit 801 is configured to receive first information from a first core network device, where the first information indicates the communication apparatus 800 to associate with a first PLMN via the first core network device, and the first PLMN corresponds to a second core network device.

The processing unit 802 is configured to establish a connection to the second core network device via the first core network device.

In a possible implementation, there is a direct communication interface between the communication apparatus 800 and the first core network device, and there is no direct communication interface between the communication apparatus 800 and the second core network device.

In another possible implementation, the first information includes a correspondence between the first core network device and at least one PLMN that includes the first PLMN, and a correspondence between the first PLMN and the second core network device.

In another possible implementation, the first information includes a correspondence between the first core network device and at least one PLMN that includes the first PLMN.

In another possible implementation, the transceiver unit 801 is further configured to:
send second information to the first core network device, where the second information indicates one or more PLMNs supported by the communication apparatus 800.

In another possible implementation, the transceiver unit 801 is further configured to:
send third information to the first core network device, where the third information indicates one or more roaming sharing PLMNs in the one or more PLMNs supported by the communication apparatus 800, and the first PLMN belongs to the one or more roaming sharing PLMNs.

In another possible implementation, the transceiver unit 801 is further configured to:
send fourth information to a terminal device, where the fourth information includes at least one of the following: first indication information, second indication information, or identification information of a target core network device corresponding to each of one or more PLMNs supported by a cell in which the terminal device is located, the first indication information indicates whether the one or more PLMNs supported by the cell in which the terminal device is located are roaming sharing PLMNs, and the second indication information indicates whether there is a direct communication interface between the communication apparatus 800 and the target core network device corresponding to each of the one or more PLMNs supported by the cell in which the terminal device is located.

In another possible implementation, the one or more PLMNs supported by the cell in which the terminal device is located include the first PLMN; and the fourth information includes at least one of the following: the first indication information indicating that the first PLMN is a roaming sharing PLMN, identification information of the second core network device, and the second indication information indicating that there is no direct communication interface between the second core network device and the communication apparatus 800.

In another possible implementation, the transceiver unit 801 is further configured to:
receive a first request from the terminal device, where the first request is used to request to access a target PLMN, and the target PLMN is determined by the terminal device based on the fourth information from the one or more PLMNs supported by the cell in which the terminal device is located.

The processing unit 802 is further configured to:
determine a target core network device corresponding to the target PLMN.

The transceiver unit 801 is further configured to:
send fifth information to the target core device, where the fifth information indicates that the terminal device requests to access the target PLMN.

In another possible implementation, when the target PLMN is the first PLMN, the target core network device is the second core network device, and the transceiver unit 801 is specifically configured to:
send the fifth information to the second core network device via the first core network device.

In another possible implementation, the fifth information further includes identification information of the second core network device.

In another possible implementation, the transceiver unit 801 is further configured to:
receive sixth information from the terminal device, where the sixth information includes at least one of the following: third indication information, fourth indication information, or identification information of a target core network device corresponding to each of one or more PLMNs supported by a neighboring cell, the third indication information indicates whether the one or more PLMNs supported by the neighboring cell are roaming sharing PLMNs, the fourth indication information indicates whether there is an interface connected between a second access network device and the target core network device corresponding to each of the one or more PLMNs supported by the neighboring cell, the neighboring cell is a neighboring cell of the cell in which the terminal device is located, and the second access network device is an access network device of the neighboring cell.

In another possible implementation, there is no direct communication interface between a core network device corresponding to the roaming sharing PLMN and the communication apparatus 800.

The following describes a communication apparatus provided in this application. FIG. 9 is a diagram of a structure of a communication apparatus 900 according to an embodiment of this application. The communication apparatus 900 may be configured to perform the steps performed by the first core network device in the embodiments shown in FIG. 3A and FIG. 3B and FIG. 6. For details, refer to the related descriptions in the foregoing method embodiments.

The communication apparatus 900 includes a transceiver unit 901 and a processing unit 902. The transceiver unit 901 may implement a corresponding communication function, and the transceiver unit 901 may also be referred to as a communication interface or a communication unit. The processing unit 902 is configured to perform a processing operation.

Optionally, the communication apparatus 900 may further include a storage unit. The storage unit may be configured to store instructions and/or data. The processing unit 902 may read the instructions and/or the data in the storage unit, to enable the communication apparatus to implement the method embodiments shown in FIG. 3A and FIG. 3B and FIG. 6.

The communication apparatus 900 may be configured to perform an action performed by the first core network device in the foregoing method embodiments. The communication apparatus 900 may be the first core network device or a component that can be configured in the first core network device. The transceiver unit 901 is configured to perform a receiving-related operation on the first core network device side in the foregoing method embodiments, and the processing unit 902 is configured to perform a processing-related operation on the first core network device side in the foregoing method embodiments.

Optionally, the transceiver unit 901 may include a sending unit and a receiving unit. The sending unit is configured to perform a sending operation of the first core network device in the method embodiments shown in FIG. 3A and FIG. 3B and FIG. 6. The receiving unit is configured to perform a receiving operation of the first core network device in the method embodiments shown in FIG. 3A and FIG. 3B and FIG. 6.

It should be noted that the communication apparatus 900 may include the sending unit, but does not include the receiving unit. Alternatively, the communication apparatus 900 may include the receiving unit, but does not include the sending unit. This may be specifically determined depending on whether the foregoing solution performed by the communication apparatus 900 includes a sending action and a receiving action.

The processing unit 902 is configured to determine first information, where the first information indicates a first access network device to associate with a first PLMN via the communication apparatus 900, and the first PLMN corresponds to a second core network device.

The transceiver unit 901 is configured to send the first information to the first access network device, where the first information is used by the first access network device to establish a connection to the second core network device via the communication apparatus 900.

In a possible implementation, there is a direct communication interface between the first access network device and the communication apparatus 900, and there is no direct communication interface between the first access network device and the second core network device.

In another possible implementation, the first information includes a correspondence between the communication apparatus 900 and at least one PLMN that includes the first PLMN, and a correspondence between the first PLMN and the second core network device.

In another possible implementation, the first information includes a correspondence between the communication apparatus 900 and at least one PLMN that includes the first PLMN.

In another possible implementation, the transceiver unit 901 is further configured to:
receive second information from the first access network device, where the second information indicates one or more PLMNs supported by the first access network device.

In another possible implementation, the transceiver unit 901 is further configured to:
receive third information from the first access network device, where the third information indicates one or more roaming sharing PLMNs in the one or more PLMNs supported by the first access network device, and the first PLMN belongs to the one or more roaming sharing PLMNs.

In another possible implementation, the transceiver unit 901 is further configured to:
receive fifth information from the first access network device, where the fifth information indicates that a terminal device requests to access a target PLMN, and the target PLMN is determined by the terminal device from one or more PLMNs supported by a cell in which the terminal device is located.

In another possible implementation, when the target PLMN is the first PLMN, the processing unit 902 is further configured to:
determine that the first PLMN corresponds to the second core network device.

The transceiver unit 901 is further configured to:
send the fifth information to the second core network device.

In another possible implementation, the processing unit 902 is specifically configured to:
determine, based on the first information, that the first PLMN corresponds to the second core network device; or
determine, based on the fifth information, that the first PLMN corresponds to the second core network device, where the fifth information further includes identification information of the second core network device corresponding to the first PLMN.

In another possible implementation, there is no direct communication interface between a core network device corresponding to the roaming sharing PLMN and the first access network device.

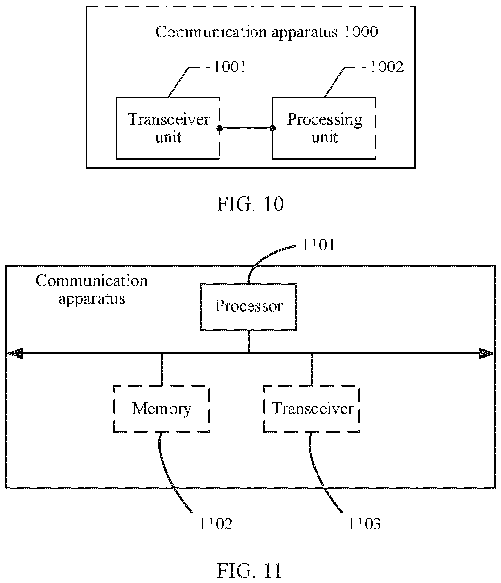

The following describes a communication apparatus provided in this application. FIG. 10 is a diagram of a structure of a communication apparatus 1000 according to an embodiment of this application. The communication apparatus 1000 may be configured to perform the steps performed by the terminal device in the embodiments shown in FIG. 3A and FIG. 3B and FIG. 6. For details, refer to the related descriptions in the foregoing method embodiments.

The communication apparatus 1000 includes a transceiver unit 1001 and a processing unit 1002. The transceiver unit 1001 may implement a corresponding communication function, and the transceiver unit 1001 may also be referred to as a communication interface or a communication unit. The processing unit 1002 is configured to perform a processing operation.

Optionally, the communication apparatus 1000 may further include a storage unit. The storage unit may be configured to store instructions and/or data. The processing unit 1002 may read the instructions and/or the data in the storage unit, to enable the communication apparatus to implement the method embodiments shown in FIG. 3A and FIG. 3B and FIG. 6.

The communication apparatus 1000 may be configured to perform an action performed by the terminal device in the foregoing method embodiments. The communication apparatus 1000 may be the terminal device or a component that can be configured in the terminal device. The transceiver unit 1001 is configured to perform a receiving-related operation on the terminal device side in the foregoing method embodiments, and the processing unit 1002 is configured to perform a processing-related operation on the terminal device side in the foregoing method embodiments.

Optionally, the transceiver unit 1001 may include a sending unit and a receiving unit. The sending unit is configured to perform a sending operation of the terminal device in the method embodiments shown in FIG. 3A and FIG. 3B and FIG. 6. The receiving unit is configured to perform a receiving operation of the terminal device in the method embodiments shown in FIG. 3A and FIG. 3B and FIG. 6.

It should be noted that the communication apparatus 1000 may include the sending unit, but does not include the receiving unit. Alternatively, the communication apparatus 1000 may include the receiving unit, but does not include the sending unit. This may be specifically determined depending on whether the foregoing solution performed by the communication apparatus 1000 includes a sending action and a receiving action.

The transceiver unit 1001 is configured to receive first information from a first access network device, where the first information includes at least one of the following: first indication information, second indication information, or identification information of a target core network device corresponding to each of one or more PLMNs supported by a cell in which the communication apparatus 1000 is located, the first indication information indicates whether the one or more PLMNs supported by the cell in which the communication apparatus 1000 is located are roaming sharing PLMNs, and the second indication information indicates whether there is a direct communication interface between the first access network device and the target core network device corresponding to each of the one or more PLMNs supported by the cell in which the communication apparatus 1000 is located.

The processing unit 1002 is configured to determine, based on the first information, a target PLMN from the one or more PLMNs supported by the cell in which the communication apparatus 1000 is located.

The transceiver unit 1001 is further configured to send a first request to the first access network device to request to access the target PLMN.

In a possible implementation, the processing unit is specifically configured to:
determine, based on the first information and at least one of capability information of supporting a PLMN by the communication apparatus 1000 and preference information of the communication apparatus 1000 for a PLMN, the target PLMN from the one or more PLMNs supported by the cell in which the communication apparatus 1000 is located.

In another possible implementation, the transceiver unit 1001 is further configured to:
receive second information from a second access network device, where the second information includes at least one of the following: third indication information, fourth indication information, or identification information of a target core network device corresponding to each of one or more PLMNs supported by a neighboring cell, the third indication information indicates whether the one or more PLMNs supported by the neighboring cell are roaming sharing PLMNs, the fourth indication information indicates whether there is a direct communication interface between the second access network device and the target core network device corresponding to each of the one or more PLMNs supported by the neighboring cell, the neighboring cell is a neighboring cell of the cell in which the communication apparatus 1000 is located, and the second access network device is an access network device of the neighboring cell; and
send the sixth information to the first access network device.

In another possible implementation, the one or more PLMNs supported by the cell in which the communication apparatus 1000 is located include a first PLMN, the first PLMN is a first PLMN that is indicated by a first core network device to the first access network device and that is associated with the first core network device, the first PLMN corresponds to a second core network device, and the first information includes at least one of the following: the first indication information indicating that the first PLMN is a roaming sharing PLMN, identification information of the second core network device, and the second indication information indicating that there is no direct communication interface between the second core network device and the first access network device.

In another possible implementation, the target PLMN is the first PLMN.

In another possible implementation, there is no direct communication interface between a core network device corresponding to the roaming sharing PLMN and the first access network device.

This application further provides a communication apparatus. FIG. 11 is a diagram of another structure of a communication apparatus according to an embodiment of this application. The communication apparatus may be configured to perform the steps performed by the first access network device or the first core network device in the embodiments shown in FIG. 3A and FIG. 3B and FIG. 6. Refer to the related descriptions in the foregoing method embodiments.

The communication apparatus includes a processor 1101. Optionally, the communication apparatus further includes a memory 1102. Optionally, the communication apparatus further includes a transceiver 1103.

In a possible implementation, the processor 1101, the memory 1102, and the transceiver 1103 are separately connected through a bus, and the memory stores computer instructions.

Optionally, the communication apparatus may be configured to perform the steps performed by the first access network device in the embodiments shown in FIG. 3A and FIG. 3B and FIG. 6. The processing unit 802 in the foregoing embodiment may be specifically the processor 1101 in this embodiment. Therefore, a specific implementation of the processor 1101 is not described again. The transceiver unit 801 in the foregoing embodiment may be specifically the transceiver 1103 in this embodiment. Therefore, a specific implementation of the transceiver 1103 is not described again.

Optionally, the communication apparatus may be configured to perform the steps performed by the first core network device in the embodiments shown in FIG. 3A and FIG. 3B and FIG. 6. The processing unit 902 in the foregoing embodiment may be specifically the processor 1101 in this embodiment. Therefore, a specific implementation of the processor 1101 is not described again. The transceiver unit 901 in the foregoing embodiment may be specifically the transceiver 1103 in this embodiment. Therefore, a specific implementation of the transceiver 1103 is not described again.

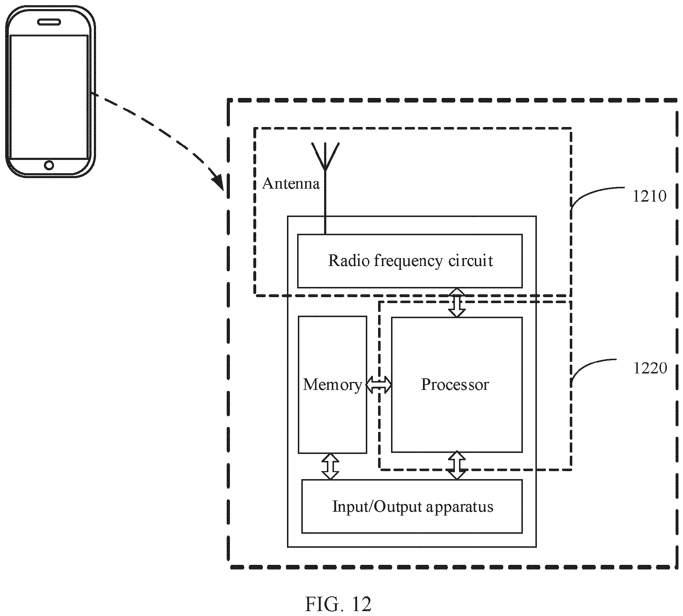

The following shows a diagram of a possible structure of a terminal device with reference to FIG. 12.

FIG. 12 is a diagram of a simplified structure of the terminal device. For ease of understanding and illustration, an example in which the terminal device is a mobile phone is used in FIG. 12. As shown in FIG. 12, the terminal device includes a processor, a memory, a radio frequency circuit, an antenna, and an input/output apparatus.

The processor is mainly configured to: process a communication protocol and communication data, control the terminal device, execute a software program, process data of the software program, and the like.

The memory is mainly configured to store the software program and the data.

The radio frequency circuit is mainly configured to: perform conversion between a baseband signal and a radio frequency signal, and process the radio frequency signal.

The antenna is mainly configured to receive and send radio frequency signals in a form of an electromagnetic wave.

The input/output apparatus, such as a touchscreen, a display, or a keyboard, is mainly configured to: receive data input by a user and output data to the user.

It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

For ease of description, FIG. 12 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have sending and receiving functions may be considered as a transceiver module of the terminal device, and the processor that has a processing function may be considered as a processing module of the terminal device. As shown in FIG. 12, the terminal device includes a transceiver module 1210 and a processing module 1220. The transceiver module may also be referred to as a transceiver, a transceiver machine, a transceiver apparatus, or the like. The processing module may also be referred to as a processor, a processing board, a processing module, a processing apparatus, or the like.

Optionally, a component for implementing a receiving function in the transceiver module 1210 may be considered as a receiving module, and a component for implementing a sending function in the transceiver module 1210 may be considered as a sending module. That is, the transceiver module 1210 includes the receiving module and the sending module. The transceiver module may also be sometimes referred to as a transceiver machine, a transceiver, a transceiver circuit, or the like. The receiving module may also be sometimes referred to as a receiver, a receive circuit, or the like. The sending module may also be sometimes referred to as a transmitter, a transmit circuit, or the like.

It should be understood that the transceiver module 1210 is configured to perform a sending operation and a receiving operation of the terminal device in the foregoing method embodiments, and the processing module 1220 is configured to perform an operation other than the sending operation and the receiving operation of the terminal device in the foregoing method embodiments.

When the terminal device is a chip, the chip includes a transceiver module and a processing module. The transceiver module may be an input/output circuit or a communication interface; and the processing module is a processor, a microprocessor, an integrated circuit, or a logic circuit integrated on the chip.

An embodiment of this application further provides a communication system. The communication system includes the first access network device and the first core device in any one of the foregoing embodiments.

Optionally, the communication system further includes the terminal device in any one of the foregoing embodiments.

An embodiment of this application further provides a chip apparatus including a processor. The processor is configured to invoke a computer program or computer instructions stored in a memory, so that the processor performs the methods in the embodiments shown in FIG. 3A and FIG. 3B and FIG. 6.

In a possible implementation, an input of the chip apparatus corresponds to the receiving operation in the embodiments shown in FIG. 3A and FIG. 3B and FIG. 6, and an output of the chip apparatus corresponds to the sending operation in the embodiments shown in FIG. 3A and FIG. 3B and FIG. 6.

Optionally, the processor is coupled to the memory through an interface, or the processor is integrated with the memory.

Optionally, the chip apparatus further includes the memory, and the memory stores the computer program or the computer instructions.

The processor mentioned anywhere above may be a general central processing unit, a microprocessor, an application-specific integrated circuit (application-specific integrated circuit, ASIC), or one or more integrated circuits configured to control program execution of the methods in the embodiments shown in FIG. 3A and FIG. 3B and FIG. 6. The memory mentioned anywhere above may be a read-only memory (read-only memory, ROM), another type of static storage device that can store static information and instructions, a random access memory (random access memory, RAM), or the like.

An embodiment of this application further provides a computer program product including computer instructions. When the computer program product runs on a computer, the computer is enabled to perform the communication methods in the embodiments shown in FIG. 3A and FIG. 3B and FIG. 6.

An embodiment of this application further provides a computer-readable storage medium, including computer instructions. When the computer instructions are run on a computer, the computer is enabled to perform the communication methods in the embodiments shown in FIG. 3A and FIG. 3B and FIG. 6.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the prior art, or all or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application.

The foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A communication method, wherein the method comprises:
receiving, by a first access network device, first information from a first core network device, wherein the first information indicates the first access network device to associate with a first public land mobile network PLMN via the first core network device, and the first PLMN corresponds to a second core network device; and
establishing, by the first access network device, a connection to the second core network device via the first core network device.

2. The method according to claim 1, wherein
there is a direct communication interface between the first access network device and the first core network device, and there is no direct communication interface between the first access network device and the second core network device.

3. The method according to claim 1 or 2, wherein the first information comprises a correspondence between the first core network device and at least one PLMN that comprises the first PLMN, and a correspondence between the first PLMN and the second core network device.

4. The method according to claim 1 or 2, wherein the first information comprises a correspondence between the first core network device and at least one PLMN that comprises the first PLMN.

5. The method according to any one of claims 1 to 4, wherein the method further comprises:
sending, by the first access network device, second information to the first core network device, wherein the second information indicates one or more PLMNs supported by the first access network device.

6. The method according to claim 5, wherein the second information is carried in an NG interface setup request message, and the first information is carried in an NG interface setup response message; or
the second information is carried in an access network configuration update message, and the first information is carried in an access network configuration update acknowledgment message.

7. The method according to claim 5 or 6, wherein the method further comprises:
sending, by the first access network device, third information to the first core network device, wherein the third information indicates one or more roaming PLMNs in the one or more PLMNs supported by the first access network device, and the first PLMN belongs to the one or more roaming sharing PLMNs.

8. The method according to claim 7, wherein the second information and the third information are carried in a same message.

9. The method according to any one of claims 1 to 8, wherein the method further comprises:
sending, by the first access network device, fourth information to a terminal device, wherein the fourth information comprises at least one of the following: first indication information, second indication information, or identification information of a target core network device corresponding to each of one or more PLMNs supported by a cell in which the terminal device is located, wherein the first indication information indicates whether the one or more PLMNs supported by the cell in which the terminal device is located are roaming sharing PLMNs, and the second indication information indicates whether there is a direct communication interface between the first access network device and the target core network device corresponding to each of the one or more PLMNs supported by the cell in which the terminal device is located.

10. The method according to claim 9, wherein the fourth information is carried in a broadcast message.

11. The method according to claim 9 or 10, wherein the one or more PLMNs supported by the cell in which the terminal device is located comprise the first PLMN, and the fourth information comprises at least one of the following: the first indication information indicating that the first PLMN is a roaming sharing PLMN, identification information of the second core network device, and the second indication information indicating that there is no direct communication interface between the second core network device and the first access network device.

12. The method according to any one of claims 7 to 10, wherein the method further comprises:
receiving, by the first access network device, a first request from the terminal device, wherein the first request is used to request to access a target PLMN, and the target PLMN is determined by the terminal device based on the fourth information from the one or more PLMNs supported by the cell in which the terminal device is located;
determining, by the first access network device, a target core network device corresponding to the target PLMN; and
sending, by the first access network device, fifth information to the target core network device, wherein the fifth information indicates that the terminal device requests to access the target PLMN.

13. The method according to claim 12, wherein the fifth information is carried in an initial user equipment message.

14. The method according to claim 12 or 13, wherein when the target PLMN is the first PLMN, the target core network device is the second core network device, and the sending, by the first access network device, fifth information to the target core device comprises:
sending, by the first access network device, the fifth information to the second core network device via the first core network device.

15. The method according to claim 14, wherein the fifth information further comprises identification information of the second core network device.

16. The method according to any one of claims 1 to 15, wherein the method further comprises:
receiving, by the first access network device, sixth information from the terminal device, wherein the sixth information comprises at least one of the following: third indication information, fourth indication information, or identification information of a target core network device corresponding to each of one or more PLMNs supported by a neighboring cell, wherein the third indication information indicates whether the one or more PLMNs supported by the neighboring cell are roaming sharing PLMNs, the fourth indication information indicates whether there is an interface connected between a second access network device and the target core network device corresponding to each of the one or more PLMNs supported by the neighboring cell, the neighboring cell is a neighboring cell of the cell in which the terminal device is located, and the second access network device is an access network device of the neighboring cell.

17. The method according to any one of claims 7 to 15, wherein there is no direct communication interface between a core network device corresponding to the roaming sharing PLMN and the first access network device.

18. A communication method, wherein the method comprises:
determining, by a first core network device, first information, wherein the first information indicates a first access network device to associate with a first public land mobile network PLMN via the first core network device, and the first PLMN corresponds to a second core network device; and
sending, by the first core network device, the first information to the first access network device, wherein the first information is used by the first access network device to establish a connection to the second core network device via the first core network device.

19. The method according to claim 18, wherein there is a direct communication interface between the first access network device and the first core network device, and there is no direct communication interface between the first access network device and the second core network device.

20. The method according to claim 18 or 19, wherein the first information comprises a correspondence between the first core network device and at least one PLMN that comprises the first PLMN, and a correspondence between the first PLMN and the second core network device.

21. The method according to claim 18 or 19, wherein the first information comprises a correspondence between the first core network device and at least one PLMN that comprises the first PLMN.

22. The method according to any one of claims 18 to 21, wherein the method further comprises:
receiving, by the first core network device, second information from the first access network device, wherein the second information indicates one or more PLMNs supported by the first access network device.

23. The method according to claim 22, wherein the method further comprises:
receiving, by the first core network device, third information from the first access network device, wherein the third information indicates one or more roaming sharing PLMNs in the one or more PLMNs supported by the first access network device, the first PLMN belongs to the one or more roaming sharing PLMNs, and there is no direct communication interface between a core network device corresponding to the roaming sharing PLMN and the first access network device.

24. The method according to any one of claims 18 to 23, wherein the method further comprises:
receiving, by the first core network device, fifth information from the first access network device, wherein the fifth information indicates that a terminal device requests to access a target PLMN, and the target PLMN is determined by the terminal device from one or more PLMNs supported by a cell in which the terminal device is located.

25. The method according to claim 24, wherein when the target PLMN is the first PLMN, the method further comprises:
determining, by the first core network device, that the first PLMN corresponds to the second core network device; and
sending, by the first core network device, the fifth information to the second core network device.

26. The method according to claim 25, wherein the determining, by the first core network device, that the first PLMN corresponds to the second core network device comprises:
determining, by the first core network device based on the first information, that the first PLMN corresponds to the second core network device; or
determining, by the first core network device based on the fifth information, that the first PLMN corresponds to the second core network device, wherein the fifth information further comprises identification information of the second core network device corresponding to the first PLMN.

27. A communication method, wherein the method comprises:
receiving, by a terminal device, first information from a first access network device, wherein the first information comprises at least one of the following: first indication information, second indication information, or identification information of a target core network device corresponding to each of one or more public land mobile networks PLMNs supported by a cell in which the terminal device is located, wherein the first indication information indicates whether the one or more PLMNs supported by the cell in which the terminal device is located are roaming sharing PLMNs, and the second indication information indicates whether there is a direct communication interface between the first access network device and the target core network device corresponding to each of the one or more PLMNs supported by the cell in which the terminal device is located;
determining, by the terminal device based on the first information, a target PLMN from the one or more PLMNs supported by the cell in which the terminal device is located; and
sending, by the terminal device, a first request to the first access network device to request to access the target PLMN.

28. The method according to claim 27, wherein the determining, by the terminal device based on the first information, a target PLMN from the one or more PLMNs supported by the cell in which the terminal device is located comprises:
determining, by the terminal device based on the first information and at least one of capability information of supporting a PLMN by the terminal device and preference information of the terminal device for a PLMN, the target PLMN from the one or more PLMNs supported by the cell in which the terminal device is located.

29. The method according to claim 27 or 28, wherein the method further comprises:
receiving, by the terminal device, second information from a second access network device, wherein the second information comprises at least one of the following: third indication information, fourth indication information, or identification information of a target core network device corresponding to each of one or more PLMNs supported by a neighboring cell, wherein the third indication information indicates whether the one or more PLMNs supported by the neighboring cell are roaming sharing PLMNs, the fourth indication information indicates whether there is a direct communication interface between the second access network device and the target core network device corresponding to each of the one or more PLMNs supported by the neighboring cell, the neighboring cell is a neighboring cell of the cell in which the terminal device is located, and the second access network device is an access network device of the neighboring cell; and
sending, by the terminal device, the second information to the first access network device.

30. The method according to any one of claims 27 to 29, wherein the one or more PLMNs supported by the cell in which the terminal device is located comprise a first PLMN, the first PLMN is a first PLMN that is indicated by a first core network device to the first access network device and that is associated with the first core network device, the first PLMN corresponds to a second core network device, and first information comprises at least one of the following: the first indication information indicating that the first PLMN is a roaming sharing PLMN, identification information of the second core network device, and the second indication information indicating that there is no direct communication interface between the second core network device and the first access network device.

31. The method according to claim 30, wherein the target PLMN is the first PLMN.

32. The method according to any one of claims 27 to 31, wherein
there is no direct communication interface between a core network device corresponding to the roaming sharing PLMN and the first access network device.

33. A communication apparatus, wherein the communication apparatus comprises a processor, wherein
the processor is configured to execute a computer program or computer instructions in a memory, to perform the method according to any one of claims 1 to 17, the method according to any one of claims 18 to 26, or the method according to any one of claims 27 to 32.

34. The communication apparatus according to claim 33, wherein the communication apparatus further comprises the memory.

35. A communication system, wherein the communication system comprises a first access network device and a first core network device, the first access network device is configured to perform the method according to any one of claims 1 to 17, and the first core network device is configured to perform the method according to any one of claims 18 to 26.

36. The communication system according to claim 35, wherein the communication system further comprises a terminal device, and the terminal device is configured to perform the method according to any one of claims 27 to 32.
